# EUROPEAN PATENT APPLICATION

(11) **EP 2 819 349 A1**
(43) Date of publication of application: **31.12.2014**
(21) Application number: 13198531.9
(22) Date of filing: 19.12.2013
(51) Int. Cl.: H04L 12/28, H04L 29/06, G06F 21/00

(54) **Communication device, communication method, and management device**

(30) Priority: 27.06.2013 JP 2013135286
(71) Applicant: Toshiba Lighting & Technology Corporation, Yokosuka-shi, Kanagawa 237-8510 (JP)
(72) Inventor: Monma, Nobuyuki, Kanagawa, 237-8510 (JP); Kyuma, Shuichi, Kanagawa, 237-8510 (JP); Ide, Kenichi, Kanagawa, 237-8510 (JP); Teramoto, Keiichi, Kanagawa, 237-8510 (JP); Terashima, Yoshiki, Kanagawa, 237-8510 (JP)
(74) Representative: Willquist, Sofia Ellinor

(57) **Abstract**

A communication device according to an embodiment includes a reception unit (131), a determination unit (132), a generation unit (133), and a transmission unit (134). The reception unit (131) receives a telegram which is transmitted to a node. The determination unit (132) determines whether or not the telegram which is received by the reception unit (131) includes a command related to a communication path. When the determination unit (132) determines that the telegram does not include the command related to the communication path, the generation unit (133) generates a non-pass signal which indicates that the telegram does not pass through a public line. The transmission unit (134) transmits the non-pass signal which is generated by the generation unit (133) to the node.

## Description

### FIELD

Embodiments described herein relate generally to a communication device, a communication method, and a management device.

### BACKGROUND

In recent years, energy management systems which control electrical appliances or the like spread. As one kind of such an energy management system, a system called a Home Energy Management System (HEMS) is known. For example, ECHONET or ECHONET Lite is used for the HEMS as a standard protocol. In ECHONET or ECHONET Lite, frames called telegrams are transmitted to nodes, such as electrical appliances, and thus it is possible to perform remote control on the nodes. A command for controlling a node by writing a value called a property and a command for acquiring the state of the node by reading the value of the property are set to such a telegram. Further, in ECHONET or ECHONET Lite, there is a case in which a plurality of commands are set to a single telegram.

In addition, in ECHONET or ECHONET Lite, there is a case in which a node is formed of a middleware adapter and a ready device. The middleware adapter is an external communication device which has a communication function. The ready device is a device, such as an electrical appliance, which includes a connection terminal that connects to the middleware adapter. When a telegram is received from a management device or the like, such a middleware adapter transmits a signal, which corresponds to a command included in the received telegram, to the ready device. Here, a middleware adapter of standard specifications can transmit only a signal corresponding to a single command to the ready device for each communication. That is, when a telegram which includes a plurality of commands is received, the middleware adapter sequentially transmits signals corresponding to the commands for the respective commands which are included in the telegram to the ready device.

In addition, in ECHONET standards, when the commands pass through a public line, it is prescribed that a command, which indicates that the public line is passed through, is assigned to a head of the commands which are included in the telegram. On the other hand, when the commands do not pass through the public line, it is not prescribed that a command which indicates that the public line is not passed through is assigned to the telegram in order to be compatible with the related art. Therefore, there is a case in which a command related to a communication path is not assigned to the telegram. Therefore, there is a case in which it is difficult for the ready device to distinguish between the commands which pass through the public line and the commands which do not pass through the public line. More specifically, when the ready device receives commands included in a telegram, to which a command which indicates that the public line is not passed through is not assigned, after receiving commands which pass through the public line, it is difficult for the ready device to determine whether or not the commands pass through the public line.

For example, it is assumed that, after a middleware adapter receives a telegram which includes a command I11 for indicating that a public line is passed through, a command I12 for turning on power, and a command I13 for setting an operation mode to cooling, the middleware adapter receives a telegram which includes a command I14 for setting a temperature to 20°C, the command I14 not passing through the public line, and a command I15 for setting the operation mode to heating, the command I15 not passing through the public line. In this case, the middleware adapter transmits signals corresponding to the respective commands to the ready device in order of the command I11, the command I12, the command 113, the command I14, and the command I15. That is, since the ready device does not receive a signal corresponding to the command which indicates that the public line is not passed through, it is difficult for the ready device to determine whether the signals corresponding to the respective commands I12 to I15 pass through the public line or do not pass through the public line.

The exemplary embodiments are made to solve the above problem, and an object of the exemplary embodiments is to provide a communication device which enables a ready device to distinguish between a command which passes through the public line and a command which does not pass through the public line.

### DESCRIPTION OF THE DRAWINGS

FIG. 1 is a diagram illustrating an example of the configuration of an energy management system according to a first embodiment.
FIG. 2 is a diagram illustrating an example of the configuration of a communication device according to the first embodiment.
FIG. 3 is a diagram illustrating an example of a process of transmitting and receiving telegrams performed by the communication device according to the first embodiment.
FIG. 4 is a diagram illustrating an example of the process of transmitting and receiving telegrams performed by the communication device according to the first embodiment.
FIG. 5 is a sequence view illustrating a procedure performed by the energy management system according to the first embodiment.
FIG. 6 is a diagram illustrating an example of the configuration of a management device according to a second embodiment.
FIG. 7 is a diagram illustrating an example of a process of transmitting and receiving telegrams performed by a communication device according to the second embodiment.
FIG. 8 is a sequence view illustrating a procedure performed by an energy management system according to the second embodiment.

### DETAILED DESCRIPTION

A communication device 100 according to an embodiment which will be described below includes a reception unit 131, a determination unit 132, a generation unit 133, and a transmission unit 134. The reception unit 131 receives a telegram which is transmitted to a node. The determination unit 132 determines whether or not the telegram which is received by the reception unit 131 includes a command related to a communication path. When the determination unit 132 determines that the telegram does not include the command related to the communication path, the generation unit 133 generates a non-pass signal which indicates that the telegram does not pass through a public line. The transmission unit 134 transmits the non-pass signal which is generated by the generation unit 133 to the node.

In addition, a management device 80 according to the embodiment which will be described below includes a reception unit 231, a determination unit 232, a generation unit 233, and a transmission unit 234. The reception unit 231 receives a command which is transmitted to the node. The determination unit 232 determines whether or not the command which is received by the reception unit 231 passes through a public line. When the determination unit 232 determines that the command does not pass through the public line, the generation unit 233 generates a telegram including a command which indicates that the public line is not passed through. The transmission unit 234 transmits the telegram which is generated by the generation unit 233 to the node.

Hereinafter, the communication device and the management device according to the embodiment will be described with reference to the accompanying drawings. In the embodiment, the same reference numerals designate the same components and the description thereof will not be repeated.

### First Embodiment

### Configuration of Energy Management System

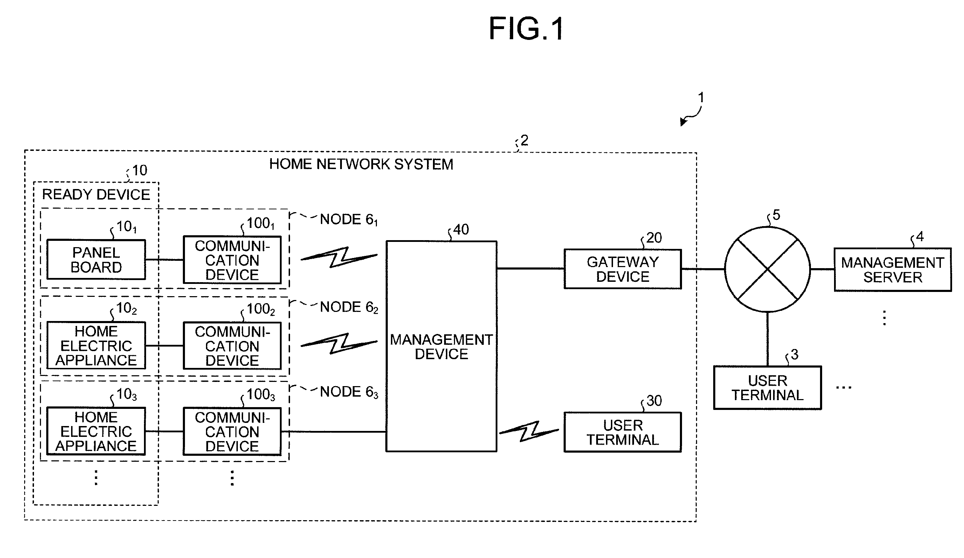

FIG. 1 is a diagram illustrating an example of the configuration of an energy management system 1 according to a first embodiment. The energy management system 1 shown in FIG. 1 is, for example, a system in order to implement the control or monitoring of home electric appliances or the like that are installed in a house, and is called HEMS. It is assumed that ECHONET Lite which is a HEMS standard protocol is used for the energy management system 1 according to the first embodiment.

The energy management system 1 includes a home network system 2, a user terminal 3, and a management server 4 as shown in FIG. 1. The home network system 2, the user terminal 3 and the management server 4 are communicatively connected to each other via a network 5 in a wired or wireless manner. The network 5 corresponds to, for example, a public line such as the Internet. Meanwhile, the energy management system 1 may include a plurality of the home network systems 2, a plurality of the user terminals 3, and a plurality of the management servers 4.

The home network system 2 is constructed in, for example, a user house or a store, and includes a node 6₁, a node 6₂, a node 6₃, a gateway device 20, a user terminal 30, a management device 40, and the like.

The nodes 6₁ to 6₃ are electrical appliances and the like which are formed of middleware adapters and ready devices. As shown in FIG. 1, the node 6₁ is formed of a panel board 10₁ which corresponds to a ready device 10 and a communication device 100₁ which corresponds to the middleware adapter. The node 6₂ is formed of a home electric appliance 10₂ which corresponds to the ready device 10 and a communication device 100₂ which corresponds to the middleware adapter. The node 6₃ is formed of a home electric appliance 10₃ which corresponds to the ready device 10 and a communication device 100₃ which corresponds to the middleware adapter. Hereinafter, when it is not necessary to distinguish between the nodes 6₁ to 6₃, the nodes are simply expressed as a "node 6".

The panel board 10₁ is provided on, for example, a wall in the user house, includes various breakers, and supplies electric power to the home electric appliance 10₂ and the home electric appliance 10₃. The home electric appliance 10₂ and the home electric appliance 10₃ are electrical appliances which are installed in the user house. For example, the home electric appliance 10₂ and the home electric appliance 10₃ correspond to a refrigerator, a television, an air conditioner, a cooking heater, a heating appliance, a hot-water heater, an electric lock, an interphone (door phone), a lighting apparatus, a washing machine, and the like.

In ECHONET Lite, the panel board 10₁, the home electric appliance 10₂ and the home electric appliance 10₃ are called "ECHONET objects". Further, attributes, such as a set value and a state, are defined as "ECHONET properties" in each of the ECHONET objects. Such an ECHONET object performs a process of writing or reading the ECHONET properties by receiving an "ECHONET Lite telegram (hereinafter, there is a case in which the ECHONET Lite telegram is simply expressed as a "telegram")" from a management device 40 which will be described later.

For example, when the ECHONET object receives a telegram to which a writing command is set in order to write a predetermined property value in the ECHONET property, the predetermined property value is written in the ECHONET property. Therefore, various types of control, such as turning on or off power" and "switching over an operation mode", are performed on the ECHONET object by the management device 40.

In addition, for example, when the ECHONET object receives a telegram to which a reading command is set in order to read a property value set to the ECHONET property, the property value which is set to the ECHONET property is transmitted to the management device 40. Therefore, the monitoring of an operation state is performed on the ECHONET object by the management device 40.

Hereinafter, when it is not necessary to distinguish between the ECHONET objects, such as the panel board 10₁ and the home electric appliances 10₂ and 10₃, the ECHONET objects are simply expressed as "ready devices 10", and the ECHONET properties are simply expressed as "properties".

The gateway device 20 is a communication device which is connected to the management device 40 and which connects the home network system 2 to the external network 5. In the example of FIG. 1, the gateway device 20 connects the management device 40 in the home network system 2 to the user terminal 3 and the management server 4, which are on the outside of the home network system 2, via the network 5.

The user terminal 30 is, for example, a tablet terminal, a Personal Computer (PC), a mobile phone, or a Personal Data Assistance (PDA), and is connected to the management device 40 via a wireless Local Area Network (LAN) or a wired LAN. The user terminal 30 transmits a command for the node 6 to the management device 40 or displays various pieces of information related to the node 6, which are received from the management device 40 according to a user operation.

The management device 40 serves as an access point, and communicates with the gateway device 20, the user terminal 30, and the communication devices 100₁ to 100₃ using a near distance radio communication technology, such as Bluetooth (registered trade mark), or an in-house LAN. The management device 40 generates a telegram to which a command, such as "writing a property value" or "reading the property value", is set based on various commands which are input from the user terminal 30, and transmits the generated telegram to the communication devices 100₁ to 100₃.

For example, when the management device 40 receives a command from the user terminal 3 via the network 5 which is a public line, it is prescribed that a command which indicates that the public line is passed through is assigned to the telegram. Therefore, the management device 40 generates a telegram that includes a command which indicates that the public line is passed through, and transmits the generated telegram to the communication devices 100₁ to 100₃.

In addition, for example, when the management device 40 receives a command from the user terminal 30, it is not prescribed that a command which indicates that the public line is not passed through is assigned to the telegram. Therefore, the management device 40 generates a telegram to which a command which indicates that the public line is not passed through is arbitrarily set, and transmits the generated telegram to the communication devices 100₁ to 100₃.

In addition, the management device 40 transmits various pieces of information, which are acquired from the telegrams received from the communication devices 100₁ to 100₃, to the user terminal 30. Therefore, for example, the results of execution of commands which are transmitted from the user terminal 30 are displayed on the display or the like of the user terminal 30. Meanwhile, the management device 40 may be formed integrally with the gateway device 20.

Meanwhile, there is a case in which telegrams transmitted from the management device 40 to the communication devices 100₁ to 100₃ are expressed as "request telegrams" and in which telegrams transmitted from the communication devices 100₁ to 100₃ to the management device 40 in response to the request telegrams are expressed as "response telegrams".

The communication devices 100₁ to 100₃ relay telegrams which are transmitted and received between the ready devices 10 and the management device 40. Meanwhile, signals corresponding to commands which are included in the request telegrams are transmitted from the communication devices 100₁ to 100₃ to the ready device 10. Hereinafter, there is a case in which signals which are transmitted from the communication devices 100₁ to 100₃ to the ready devices 10 are expressed as "request signals". In addition, response signals are transmitted from the ready devices 10 to the communication devices 100₁ to 100₃ in response to the request signals. Meanwhile, there is a case in which the signals which are transmitted from the ready devices 10 to the communication devices 100₁ to 100₃ are expressed as "response signals". In addition, hereinafter, when it is not necessary to distinguish between the communication devices 100₁ to 100₃, there is a case in which the communication devices are simply expressed as "communication devices 100".

As described above, it is possible for a user who uses the home network system 2 to control the ready devices 10 via the management device 40 using the user terminal 30. For example, when the user terminal 30 is a mobile phone, it is possible for the user to perform in-house control which controls the operations of the ready devices 10 or to monitor the operation states of the ready devices 10 by only operating the mobile phone in the house.

In addition, in FIG. 1, the user terminal 3 which is shown on the outside of the home network system 2 is, for example, a mobile phone, a PDA, a tablet terminal or a PC, and is connected to the network 5 which is the public line via a wireless LAN or a wired LAN. The user terminal 3 transmits commands for the ready devices 10 to the management server 4 according to the operation of the user, or displays various pieces of information related to the ready devices 10 which are received from the management server 4, like the user terminal 30. Meanwhile, commands which are transmitted from the user terminal 3 to the management server 4 include a command which indicates that the public line is passed through.

The management server 4 transmits various commands, which are received from the user terminal 3 via the network 5, to the management device 40. Therefore, the management device 40 controls the ready devices 10 based on the commands which are transmitted from the user terminal 3 positioned on the outside of the home network system 2. In addition, the management server 4 transmits various pieces of information, which are related to the ready devices 10 and which are received from the management device 40 via the network 5, to the user terminal 3. Therefore, the user terminal 3 displays the various pieces of information which are related to the ready devices 10 which are positioned in the home network system 2. As described above, even when the user of the user terminal 3 is not present in the home network system 2, it is possible for the user to perform remote control which controls the ready devices 10 or to monitor the operation states of the ready devices 10.

Although details will be described later, when the above-described communication device 100 receives a request telegram from the management device 40, the communication device 100 determines whether or not a command related to a communication path is included in the request telegram. In the example of FIG. 1, for example, when the communication device 100 receives the request telegram from the management device 40 which receives a command from the user terminal 3 via the network 5, a command which indicates that the public line is passed through is included in the request telegram. Therefore, the communication device 100 determines that the command related to the communication path is included. In other examples, when the communication device 100 receives a request telegram which does not include a command which indicates that the public line is not passed through, from the management device 40 which receives a command from the user terminal 30, the communication device 100 determines that the command related to the communication path is not included.

Further, when the communication device 100 determines that the command related to the communication path is not included, the communication device 100 generates a non-pass signal which indicates that the request telegram does not pass through the public line, and transmits the generated non-pass signal to the ready device 10. Thereafter, the communication device 100 generates request signals based on commands which are included in the request telegram received from the management device 40, and transmits the generated request signals to the ready device 10 in order of the commands which are included in the request telegram. Therefore, it is possible for the ready device 10 to distinguish between the command which passes through the public line and the command which does not pass through the public line.

In such an energy management system 1, it is possible to enable each of the ready devices 10 to distinguish between the command which passes through the public line and the command which does not pass through the public line due to the process performed by the communication device 100. Therefore, it is possible for the nodes 6 to satisfy specifications which are necessary to make partial amendment to the analysis of regulation which defines the technical basis of electrical equipment, that is, specifications in which behaviors are changed depending on whether the command passes through the public line or the command does not pass through the public line without changing the ready device 10.

For example, when the ready device 10 receives a command which passes through the public line and which is transmitted through remote control that performs control through a communication line, it is possible to operate the ready device 10 in a remote control mode in which a command is processed while various types of safe control, such as turning off the power of equipment, are performed when failures occur in the communication lines (for example, the network 5) in addition to normal operations. In addition, when the ready device 10 receives a command which does not pass through the public line and which is transmitted through in-house control in which operations are performed using a remote controller in a house, it is possible to cause the ready device to perform normal operations in an in-house control mode. Therefore, for example, when the ready device 10 receives a command which does not pass through the public line in a state in which the ready device 10 is operated in the remote control mode, it is possible for the ready device 10 to process the command by switching from the remote control mode to the in-house control mode.

### Configuration of Communication Device

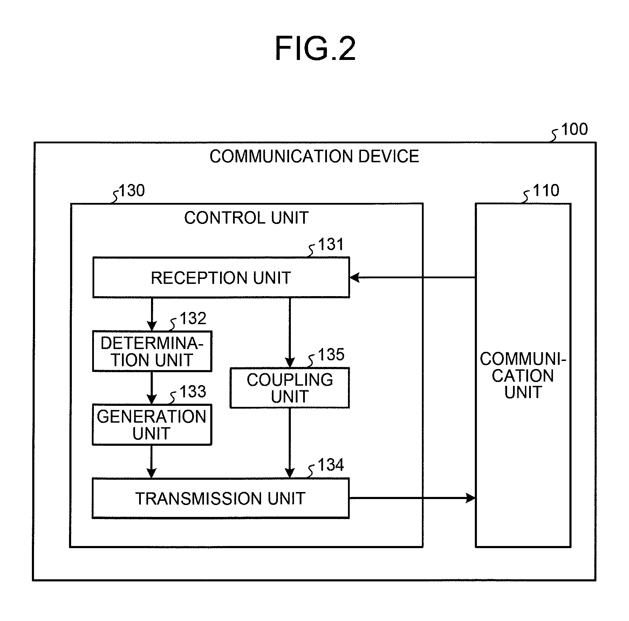

FIG. 1 is a diagram illustrating an example of the configuration of the communication device 100 according to the first embodiment. As shown in FIG. 2, the communication device 100 according to the first embodiment includes a communication unit 110 and a control unit 130.

The communication unit 110 performs a wireless communication process and a wired communication process. For example, the communication unit 110 transmits and receives various pieces of information, such as telegrams and signals, between the ready device 10 and the management device 40 shown in FIG. 1 through wireless communication or wired communication.

The control unit 130 is implemented by an integrated circuit, for example, an Application Specific Integrated Circuit (ASIC) or a Field Programmable Gate Array (FPGA). In addition, the control unit 130 is implemented in such a way that a program which is stored in an internal storage device is executed by, for example, a Central Processing Unit (CPU) or a Micro Processing Unit (MPU) while a RAM is used as an operation area. The control unit 130 includes a reception unit 131, a determination unit 132, a generation unit 133, a transmission unit 134, and a coupling unit 135.

The reception unit 131 receives a request telegram, which is transmitted to the node 6, from the management device 40. That is, in the first embodiment, the request telegram which is transmitted from the management device 40 is intercepted by the communication device 100 without directly transmitting the request telegram from the management device 40 to the ready device 10.

In addition, the reception unit 131 receives a response signal for the request signal from the ready device 10 which receives the request signal transmitted by the transmission unit 134 which will be described later. In this case, the reception unit 131 outputs the response signal which is received from the ready device 10 to the coupling unit 135.

The determination unit 132 determines whether or not a command related to a communication path is included in the request telegram which is received by the reception unit 131. In detail, the determination unit 132 determines whether or not a public line pass command which indicates that the public line is passed through or a public line non-pass command which indicates that the public line is not passed through is included in the request telegram which is received by the reception unit 131. For example, when the command related to the communication path is set to the command of the head of the telegram, the determination unit 132 determines whether the command of the head is the public line pass command or the public line non-pass command in commands which are included in the request telegram. However, the exemplary embodiment is not limited to the example. When it is not prescribed that the command related to the communication path is set to the command of the head of the telegram, the determination unit 132 determines whether any of the commands which are in the telegram is the public line pass command or the public line non-pass command.

The generation unit 133 generates signals corresponding to commands to be transmitted to the ready device 10. More specifically, when the determination unit 132 determines that the command related to the communication path is not included in the request telegram, the generation unit 133 generates a non-pass signal which indicates that the public line is not passed through. In addition, the generation unit 133 generates request signals corresponding to commands which are included in the request telegram received by the reception unit 131. More specifically, the generation unit 133 separates the commands included in the request telegram, and generates signals individually. Meanwhile, when the determination unit 132 determines that the command related to the communication path is included in the request telegram, the generation unit 133 generates request signals without generating a non-pass signal.

The transmission unit 134 transmits the signals which are generated by the generation unit 133 to the ready device 10. More specifically, when the determination unit 132 determines that the command related to the communication path is not included in the request telegram, the transmission unit 134 transmits the non-pass signal to the ready device 10 and transmits the signals to the ready device 10 in order of the commands which are included in the request telegram. Meanwhile, when the determination unit 132 determines that the command related to the communication path is included in the request telegram, the transmission unit 134 transmits the signals which are generated by the generation unit 133 to the ready device 10 in order of the commands which are included in the request telegram.

When the response signals are received by the reception unit 131, the coupling unit 135 generates a single response telegram by coupling the response signals. Further, the coupling unit 135 transmits the response telegram to the management device 40 by outputting the generated response telegram to the transmission unit 134.

### First Process Example of Communication Device

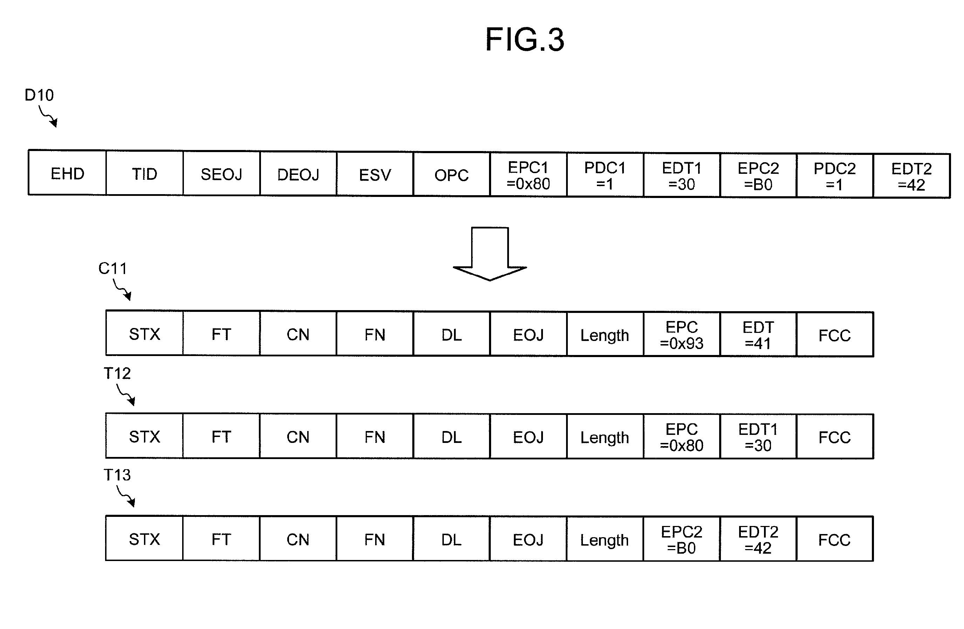

Subsequently, a process of transmitting and receiving the telegram, which does not include the command related to the communication path, performed by the communication device 100 will be described with reference to FIG. 3. FIG. 2 is a diagram illustrating an example of a process of transmitting and receiving a telegram performed by the communication device 100 according to the first embodiment. A request telegram D10 which is received from the management device 40 is shown on the upper side of FIG. 3 and request signals C11, T12, and T13 which are transmitted to the ready device 10 by the communication device 100 are shown in the lower side of FIG. 3.

As shown on the upper side of FIG. 3, the request telegram D10 includes items of "EHD", "TID", "SEOJ", "DEOJ", "ESV", "OPC", "EPC1", "PDC1", "EDT1", "EPC2", "PDC2", "EDT2", and the like.

"EHD" indicates the header of an ECHONET Lite telegram and a protocol type or the like is set thereto. "TID" indicates an identifier which indentifies the telegram. "TID" is used when a transmission side (for example, the management device 40) connects the request telegram with the response telegram in ECHONET Lite communication. "SEOJ" indicates an identifier which identifies an ECHONET object of a transmission source. "DEOJ" indicates an identifier which identifies an ECHONET object of a transmission destination.

"ESV" indicates an ECHONET Lite service. For example, when a command which is included in the request telegram D10 is "write a property value", "0x61" is set to "ESV". When a command which is included in the request telegram D10 is "read a property value", "0x62" is set to "ESV".

"OPC" indicates a process target property counter and corresponds to the number of commands which are included in the request telegram D10. More specifically, the number of combinations of "EPC", "PDC" and "EDT" on the rear side is set to "OPC" as "the number of properties which are targets to write property values" or "the number of properties which are targets to read the property values".

"EPC", "PDC" and "EDT" correspond to a single command. Here, "EPC" indicates an ECHONET Lite property. "PDC" indicates the number of bytes of "EDT" on the rear side. "EDT" indicates the value of the ECHONET Lite property.

That is, since there are two combinations of "EPC", "PDC" and "EDT" in the request telegram D10 shown in FIG. 3, two commands are included for properties.

In addition, in the example of FIG. 3, "EPC1=0x80" indicates that a property is power. "PDC1=1" indicates that "EDT1" is one byte. "EDT1=30" indicates a command for turning on the power. "EPC2=B0" indicates that the property is an operation mode. "PDC2=1" indicates that "EDT2" is one byte. "EDT2=42" indicates a command for switching the operation mode to cooling.

Here, when there is the command related to the communication path, it is assumed that the command related to the communication path is set to the command of the head of commands which are included in the telegram. In this case, when the request telegram D10 is received by the reception unit 131, the determination unit 132 determines whether the command of the head which is included in the request telegram D10, that is, "EPC1", "PDC1" and "EDT1" correspond to a public line pass command or a public line non-pass command. For example, the determination unit 132 determines whether or not "0x93" is set to "EPC1". Here, when "0x93" is set to "EPC1", the determination unit 132 determines that the command related to the communication path is included in the request telegram D10. Meanwhile, when "0x93" is set to "EPC1" and "42" is set to "EDT1", it is indicated that the request telegram D10 passes through the public line. In addition, when "0x93" is set to "EPC1" and "41" is set to "EDT1", it is indicated that the request telegram D10 does not pass through the public line.

That is, since "0x80" is set to "EPC1" in the example of FIG. 3, the determination unit 132 determines that the command related to the communication path is not included in the request telegram D10.

Subsequently, since the command related to the communication path is not included in the request telegram D10 in the example of FIG. 3, the generation unit 133 generates a non-pass signal C11 which indicates that the public line is not passed through. As shown in FIG. 3, the non-pass signal C11 includes items of "STX", "FT", "CN", "FN", "DL", "EOJ", "Length", "EPC", "EDT", "FCC", and the like.

"STX" indicates a control code. "FT" indicates the type of each signal. "CN" indicates a code of one byte in order to designate an ECHONET Lite middleware adapter communication interface service. "FN" indicates a number which identifies a signal assigned by a request side. Meanwhile, in the case of a response signal, the same number as that of the request signal is set to "FN". "DL" indicates the size of a frame data "FD" section which follows thereafter. "EOJ" indicates an object code which is maintained in an adapter. "Length" indicates the number of bytes corresponding to the sum of "EPC" and "EDT". "EPC" indicates an ECHONET Lite property. "EDT" indicates the value of the ECHONET Lite property. "FCC" indicates a check code of one byte.

In addition, as shown in FIG. 3, the generation unit 133 sets "0x93" to "EPC" of the non-pass signal C11 and sets "41" to "EDT". Therefore, it is possible for the generation unit 133 to generate the non-pass signal C11 which indicates that the public line is not passed through.

Subsequently, the generation unit 133 generates the request signal T12 which indicates the commands of "EPC1", "PDC1" and "EDT1" included in the request telegram D10, and generates the request signal T13 which indicates the commands of "EPC2", "PDC2" and "EDT2" included in the request telegram D10 as shown on the lower side of FIG. 3.

Further, the transmission unit 134 transmits the non-pass signal C11 and the request signals T12 and T13 which are generated by the generation unit 133 to the ready device 10 in order of the request signals C11, T12, and T13. Therefore, it is possible for the communication device 100 to cause the ready device 10 to recognize the request signal T12 and the request signal T13 as the commands which do not pass through the public line. Thereafter, the reception unit 131 receives response signals corresponding to the respective request signals C11, T12 and T13 from the ready device 10, and outputs the respective received response signals to the coupling unit 135.

Further, when all of the response signals corresponding to the request signals C11, T12 and T13 are completely received, the coupling unit 135 generates a response telegram corresponding to the request telegram D10 by coupling the respective response signals. More specifically, in the response telegram of ECHONET Lite, response content corresponding to the commands (the combination of "EPC", "PDC" and "EDT") is set in order of commands (the combination of "EPC", "PDC" and "EDT") which are set to the request telegram. Therefore, the coupling unit 135 extracts response content from the respective response signals which are received from the ready device 10, and arranges the extracted response content in order of the commands which are set to the request telegram D10, thereby generating a response telegram corresponding to the request telegram D10.

Meanwhile, when it is difficult to receive a part of the response signals for the request signals even when a predetermined time elapses after the request signals are transmitted, it is possible for the coupling unit 135 to generate the response telegram for the request telegram D10 based on only the response signals which are completely received. In this case, the coupling unit 135 skips response content corresponding to commands which are not responded, and puts the response content corresponding to the following commands ahead, thereby generating the response telegram for the request telegram D10.

Further, the transmission unit 134 transmits the response telegram which is generated by the coupling unit 135 to the management device 40.

### Second Process Example of Communication Device

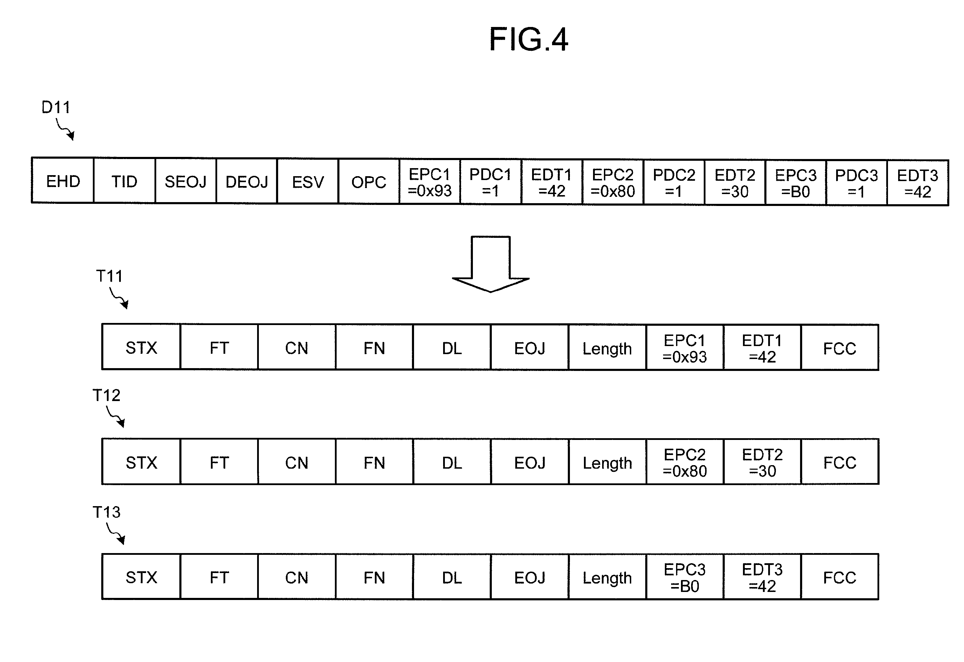

Subsequently, a process of transmitting and receiving the telegram, which includes the command related to the communication path, performed by the communication device 100 will be described with reference to FIG. 4. FIG. 4 is a diagram illustrating an example of the process of transmitting and receiving the telegram performed by the communication device 100 according to the first embodiment. A request telegram D11 which is received from the management device 40 is shown on the upper side of FIG. 4, and request signals T11 to T13 which are transmitted to the ready device 10 by the communication device 100 are shown on the lower side of FIG. 4.

As shown on the upper side of FIG. 4, the request telegram D11 includes items of "EHD", "TID", "SEOJ", "DEOJ", "ESV", "OPC", "EPC1", "PDC1", "EDT1", "EPC2", "PDC2", "EDT2", "EPC3", "PDC3", "EDT3", and the like.

That is, since there are three combinations of "EPC", "PDC" and "EDT" in the request telegram D11 shown in FIG. 4, three commands are included for properties.

In addition, in the example of FIG. 4, "EPC1=0x93" indicates that a property is a public line. "PDC1=1" indicates that "EDT1" is one byte. "EDT1=42" indicates that the request telegram D11 passes through the public line. "EPC2=0x80" indicates that the property is power. "PDC2=1" indicates that "EDT2" is one byte. "EDT2=30" indicates a command for turning on power. "EPC3=B0" indicates that the property is an operation mode. "PDC3=1" indicates that "EDT3" is one byte. "EDT3=42" indicates a command for causing the operation mode to be cooling.

When the request telegram D11 is received by the reception unit 131, the determination unit 132 determines whether or not the command of a head included in the request telegram D11, that is, "EPC1", "PDC1" and "EDT1" correspond to the command related to the communication path. More specifically, the determination unit 132 determines whether or not "0x93" is set to "EPC1". Meanwhile, when there is the command related to the communication path, it is assumed that the command related to the communication path is set to the command of the head of commands which are included in the telegram.

That is, since "0x93" is set to "EPC1" in the example of FIG. 4, the determination unit 132 determines that the command related to the communication path is included in the request telegram D11.

Subsequently, since the command related to the communication path is included in the request telegram D11 in the example of FIG. 4, the generation unit 133 generates the request signal T11 which indicates the commands of "EPC1", "PDC1" and "EDT1", the request signal T12 which indicates the commands of "EPC2", "PDC2" and "EDT2", and the request signal T13 which indicates the commands of "EPC3", "PDC3" and "EDT3", respectively, as shown on the lower side of FIG. 4.

Further, the transmission unit 134 transmits the request signals T11 to T13 which are generated by the generation unit 133 to the ready device 10. Therefore, the reception unit 131 receives response signals corresponding to the respective request signals T11 to T13 from the ready device 10, and outputs the received respective response signals to the coupling unit 135.

Further, when all of the response signals corresponding to the request signals T11 to T13 are completely received, the coupling unit 135 generates a response telegram corresponding to the request telegram D11 by coupling the respective response signals. Further, the transmission unit 134 transmits the response telegram which is generated by the coupling unit 135 to the management device 40.

### Procedure of Energy Management System

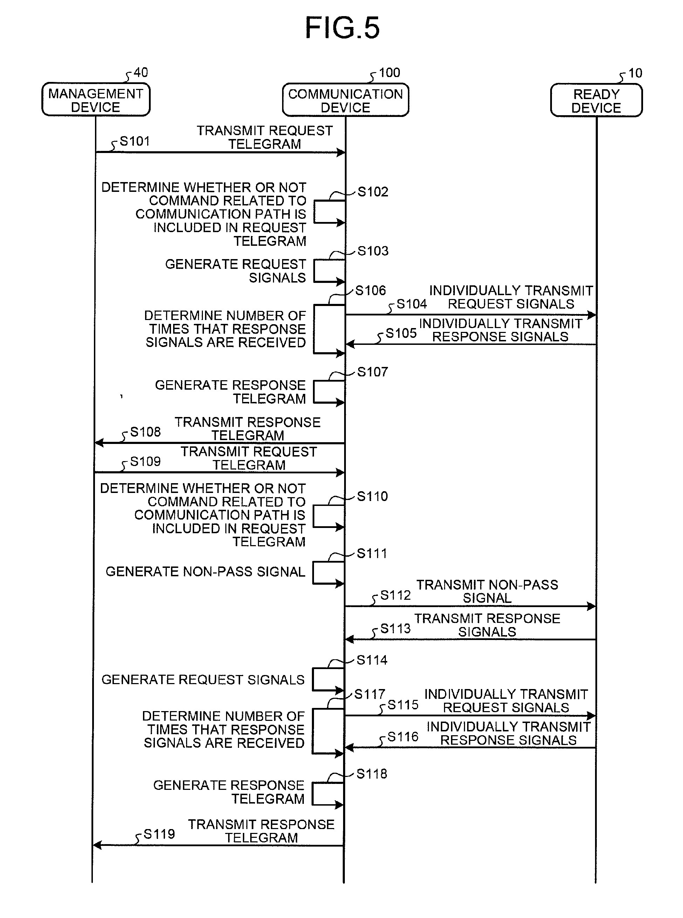

Subsequently, a procedure of processes performed by the energy management system 1 will be described with reference to FIG. 5. FIG. 5 is a sequence view illustrating a procedure performed by the energy management system 1 according to the first embodiment. Meanwhile, FIG. 5 illustrates an example of a process in a case in which, after the communication device 100 receives a request telegram which includes a command related to a communication path, the communication device 100 receives a request telegram which does not include the command related to the communication path.

In the example shown in FIG. 5, the management device 40 transmits a request telegram, which includes a command related to a communication path, to the communication device 100 (Act S101). The determination unit 132 of the communication device 100 determines whether or not the command related to the communication path is included in the request telegram which is received from the management device 40 (Act S102). Here, the determination unit 132 determines that the command related to the communication path is included in the request telegram. In this case, as in the example shown in FIG. 4, the generation unit 133 generates request signals (Act S103).

Further, the transmission unit 134 individually transmits the request signals which are generated by the generation unit 133 to the ready device 10 (Act S104). Further, the ready device 10 individually transmits response signals for the request signals which are received from the communication device 100 to the communication device 100 (Act S105).

In addition, the coupling unit 135 determines whether or not all of the response signals for the respective signals which are transmitted by the transmission unit 134 are received between Act S104 and Act S105 (Act S106). Further, when all of the response signals are received, the coupling unit 135 generates a response telegram by coupling the received response signals (Act S107). Further, the transmission unit 134 transmits the response telegram, which is acquired after the response signals are coupled by the coupling unit 135, to the management device 40 as a response telegram for the request telegram which is received in Act S101 (Act S108).

Subsequently, the management device 40 transmits a request telegram which does not include the command related to the communication path to the communication device 100 (Act S109). The determination unit 132 of the communication device 100 determines whether or not the request telegram which is received from the management device 40 includes the command related to the communication path (Act S110). Here, the determination unit 132 determines that the request telegram does not include the command related to the communication path. In this case, the generation unit 133 generates a non-pass signal as shown in FIG. 3 (Act S111).

Further, the transmission unit 134 transmits the non-pass signal which is generated by the generation unit 133 to the ready device 10 (Act S112). Therefore, since the ready device 10 receives the non-pass signal, it is possible to determine that request signals which will be received hereinafter do not pass through a public line. Further, the ready device 10 transmits a response signal for the non-pass signal which is received from the communication device 100 to the communication device 100 (Act S113).

Subsequently, the generation unit 133 generates request signals as shown in FIG. 3 (Act S114). Further, the transmission unit 134 individually transmits the signals generated by the generation unit 133 to the ready device 10 (Act S115). Meanwhile, since the ready device 10 receives the non-pass signal in Act S112, it is possible to determine that the request signals which are transmitted to the ready device 10 in Act S115 do not pass through the public line. Further, the ready device 10 individually transmits response signals for the signals which are received from the communication device 100 to the communication device 100 (Act S116).

Meanwhile, the communication device 100 may perform the process of generating the request signals in Act S114 before the processes performed in Act S111, Act S112, or Act S113. However, the communication device 100 performs the process of transmitting the non-pass signal in Act S112 before the process of individually transmitting the request signals in Act S115.

In addition, the coupling unit 135 determines whether or not all of the response signals for the respective signals which are transmitted by the transmission unit 134 are received between Act S115 and Act S116 (Act S117). Further, when all of the response signals are received, the coupling unit 135 generates a response telegram by coupling the received response signals (Act S118). Further, the transmission unit 134 transmits the response telegram, which is acquired after the response signals are coupled by the coupling unit 135, to the management device 40 as a response telegram for the request telegram which is received in Act S101 (Act S119).

### Advantage of First Embodiment

As described above, in the communication device 100 according to the first embodiment, when the command related to the communication path is not included in the request telegram which is received from the management device 40, the non-pass signal is generated, and the generated non-pass signal is transmitted to the ready device 10. Therefore, it is possible to cause the ready device 10 to distinguish between the command which passes through the public line and the command which does not pass through the public line.

### Second Embodiment

In the first embodiment, description is made such that, when there is no command related to the communication path, the communication device 100 generates the command related to the communication path. However, the command related to the communication path may be generated by the management device 40. Here, in a second embodiment, an example in which a management device 80 generates a telegram which includes the command related to the communication path will be described. Meanwhile, the configuration of an energy management system 1 according to the second embodiment is the same as in the example shown in FIG. 1, and thus the description thereof will not be repeated below.

### Configuration of Management Device

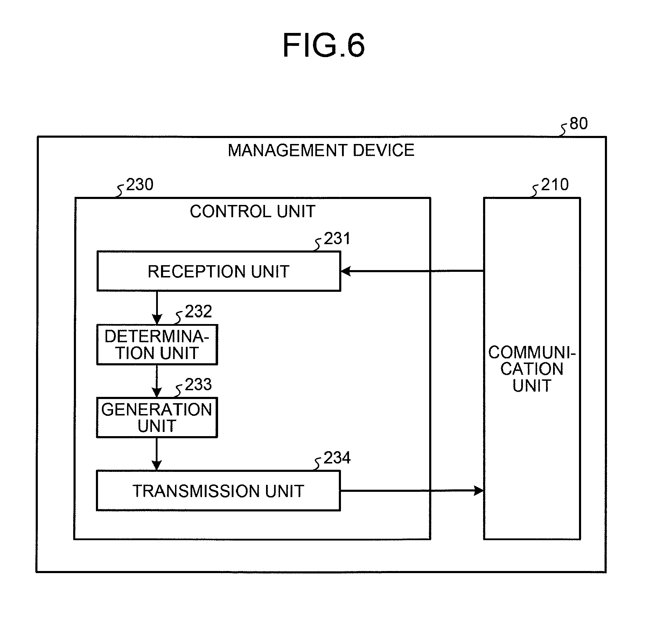

FIG. 6 is a diagram illustrating an example of the configuration of the management device 80 according to the second embodiment. As shown in FIG. 6, the management device 80 includes a communication unit 210 and a control unit 230.

The communication unit 210 performs a wireless communication process and a wired communication process. For example, the communication unit 210 transmits and receives various pieces of information, such as telegrams and commands, through wireless communication or wired communication between the node 6, the gateway device 20 and the user terminal 30 which are shown in FIG. 1.

The control unit 230 is implemented by an integrated circuit, for example, an ASIC or an FPGA. In addition, the control unit 230 is implemented in such a way that a program which is stored in an internal storage device is executed by, for example, a CPU or an MPU while a RAM is used as an operation area. The control unit 230 includes a reception unit 231, a determination unit 232, a generation unit 233, and a transmission unit 234.

The reception unit 231 receives a command, which is transmitted to the ready device 10, from the gateway device 20 or the user terminal 30. That is, the command which is transmitted from the gateway device 20 or the user terminal 30 is intercepted by the management device 80 without directly transmitting the command from the gateway device 20 or the user terminal 30 to the ready device 10.

In addition, the reception unit 231 receives a response telegram for a request telegram from the communication device 100 which receives the request telegram transmitted by the transmission unit 234 which will be described later. In this case, the reception unit 231 outputs the response telegram which is received from the communication device 100 to the user terminal 3 or the user terminal 30.

The determination unit 232 determines whether or not the command received by the reception unit 231 passes through a public line. More specifically, when the command which is received by the reception unit 231 is a command which is transmitted from the gateway device 20, the determination unit 232 determines that the public line is passed through. The reason for this is that the command which is transmitted from the gateway device 20 is a command which is transmitted from the user terminal 3 via the network 5 which is the public line.

The generation unit 233 generates a telegram to be transmitted to the communication device 100. More specifically, when the determination unit 232 determines that the command does not pass through the public line, the generation unit 233 generates a telegram which includes a command which indicates that the public line is not passed through and a command which corresponds to the command which is received by the reception unit 231.

The transmission unit 234 transmits the telegram which is generated by the generation unit 233 to the communication device 100. In addition, the transmission unit 234 transmits the response telegram which is received by the reception unit 231 to the user terminal 3.

### Process Example of Management Device

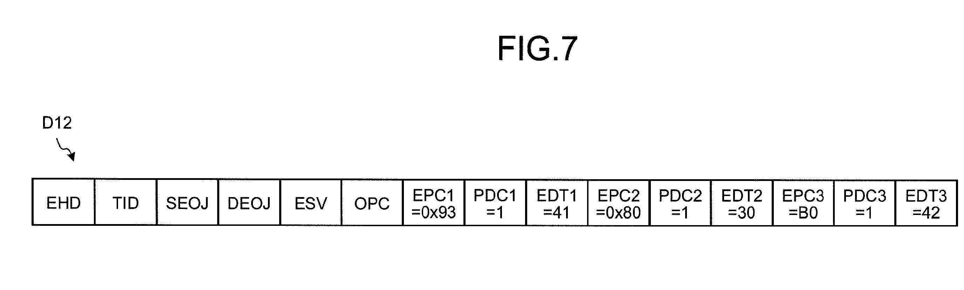

Subsequently, a process of generating the request telegram, which includes the command related to the communication path, performed by the management device 80 will be described with reference to FIG. 7. Meanwhile, in the description below, it is assumed that the management device 80 receives a command for turning on power and a command for switching the operation mode to cooling from the user terminal 30.

In this case, since a command which is received by the reception unit 231 is not a command which is transmitted from the gateway device 20, the determination unit 232 determines that the public line is not passed through. Further, since the determination unit 232 determines that the public line is not passed through, the generation unit 233 generates a request telegram D12 which includes the command which indicates that the public line is not passed through.

FIG. 7 is a diagram illustrating an example of a request telegram which is generated by the management device 80 according to the second embodiment. FIG. 7 illustrates a request telegram D12 that includes the command which indicates that the public line is not passed through and the command which is received from the user terminal 30.

As shown in FIG. 7, the generation unit 233 sets "0x93" which indicates that the property is the public line to "EPC1" of the request telegram D12. In addition, the generation unit 233 sets "1", which indicates that "EDT1" is one byte, to "PDC1", and sets "41" which indicates that the public line is not passed through to "EDT1".

Further, the transmission unit 234 transmits the request telegram D12 which is generated by the generation unit 233 to the communication device 100. Further, the communication device 100 individually transmits signals corresponding to commands which are included in the received request telegram D12 to the ready device 10. Therefore, the signals corresponding to the commands which indicate that the public line is not passed through are transmitted to the ready device 10. Therefore, since the ready device 10 receives the signals corresponding to the commands which indicate that the public line is not passed through, it is possible to determine that the signals corresponding to the commands which are included in the request telegram D12 do not pass through the public line.

Further, the reception unit 231 receives a response telegram which corresponds to the request telegram D12 from the communication device 100, and transmits each received response telegram to the user terminal 30.

### Procedure of Energy Management System

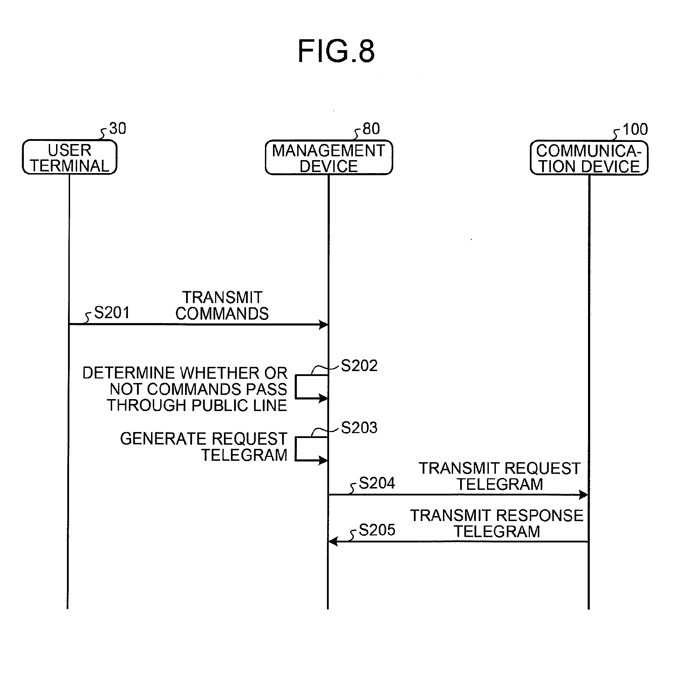

Subsequently, the procedure of a process performed by the energy management system 1 will be described with reference to FIG. 8. FIG. 8 is a sequence view illustrating a procedure performed by the energy management system 1 according to the second embodiment.

In an example shown in FIG. 8, the user terminal 30 transmits commands to the management device 80 (Act S201). The determination unit 232 of the management device 80 determines whether or not the commands which are received from the user terminal 30 pass through the public line (Act S202). Here, it is assumed that the determination unit 232 determines that the commands do not pass through the public line. In this case, the generation unit 233 generates a request telegram (Act S203) like the example shown in FIG. 7.

Further, the transmission unit 234 transmits the request telegram which is generated by the generation unit 233 to the communication device 100 (Act S204). Therefore, the communication device 100 transmits a response telegram, which is acquired by coupling response signals which are received from the ready device 10, to the management device 80 (Act S205).

### Advantage of Second Embodiment

As described above, according to the management device 80 according to the second embodiment, when the commands which are received from the user terminal 30 do not pass through the public line, a request telegram which includes the commands which are passed through the public line is generated, and the generated request telegram is transmitted to the communication device 100. Therefore, it is possible to cause the ready device 10 to distinguish between the command which passes through the public line and the command which does not pass through the public line.

### Other Embodiments

In the first embodiment, an example, in which the response signals are coupled when all of the response signals corresponding to the request signals are received, is described. However, when all of the response signals are not received even when a predetermined time elapses, the communication device 100 may transmit a request signal, the response signal for which is not received, to the ready device 10 again, and may transmit a response telegram acquired by coupling only response signals which are completely received to the management device 40 as a disabling response.

Although description is made using ECHONET Lite as an example in the first and second embodiments, it is possible to apply each of the above-described embodiments to ECHONET in the same manner.

In addition, the configuration of the energy management system 1 of the above embodiments is not limited to the example of FIG. 1. For example, in a case of a system in which a request telegram is transmitted from the management server 4 to the home network system 2, the management device 40 (or the management device 80) and the communication device 100 may be configured to be integrally formed. In this case, a plurality of communication devices 100 are not installed in the home network system 2 as in the example of FIG. 1, the management device 40 (or the management device 80) has the same function as the above-described communication device 100. In addition, the exemplary embodiments are not limited to the example and may be configured such that the gateway device 20 is integrally formed of the communication device 100.

In addition, for example, the energy management system 1 may not include the user terminal 3 and the management server 4. In addition, for example, the home network system 2 may not include the user terminal 30. In this case, the management device 40 displays a control screen in order to control the ready devices 10 or the like. Further, the user controls and monitors the ready devices 10 by operating the control screen.

As described above, according to the embodiments, it is possible to cause the ready device to distinguish between the command which passes through the public line and the command which does not pass through the public line.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A communication device (100) comprising:
a reception unit (131) configured to receive a telegram which is transmitted to a node;
a determination unit (132) configured to determine whether or not the telegram which is received by the reception unit (131) includes a command related to a communication path;
a generation unit (133) configured to generate a non-pass signal which indicates that the telegram does not pass through a public line when the determination unit (132) determines that the telegram does not include the command related to the communication path; and
a transmission unit (134) configured to transmit the non-pass signal which is generated by the generation unit (133) to the node.

2. The device (100) according to Claim 1,
wherein the determination unit (132) determines whether or not a command of a head which is included in the telegram received by the reception unit (131) is the command related to the communication path, and
wherein the generation unit (133) generates the non-pass signal which indicates that the telegram does not pass through the public line when the determination unit (132) determines that the command of the head which is included in the telegram is not the command related to the communication path.

3. The device (100) according to Claim 1,
wherein the transmission unit (134) transmits commands which are included in the telegram after transmitting the non-pass signal which is generated by the generation unit (133).

4. The device (100) according to Claim 2,
wherein the transmission unit (134) transmits commands which are included in the telegram after transmitting the non-pass signal which is generated by the generation unit (133).

5. The device (100) according to Claim 3,
wherein the transmission unit (134) individually transmits the commands which are included in the telegram from the head sequentially.

6. The device (100) according to Claim 4,
wherein the transmission unit (134) individually transmits the commands which are included in the telegram from the head sequentially.

7. A management device (80) comprising:
a reception unit (231) configured to receive a command which is transmitted to a node;
a determination unit (232) configured to determine whether or not the command which is received by the reception unit (231) passes through a public line;
a generation unit (233) configured to, when the determination unit (232) determines that the command does not pass through the public line, generate a telegram which includes a command which indicates that the public line is not passed through; and
a transmission unit (234) configured to transmit the telegram which is generated by the generation unit (233) to the node.

8. A communication method which is performed by a communication device (100), comprising:
receiving a telegram which is transmitted to a node (S109);
determining whether or not the received telegram includes a command related to a communication path (S110);
generating a non-pass signal which indicates that the telegram does not pass through a public line when it is determined that the telegram does not include the command related to the communication path (S111); and
transmitting the generated non-pass signal to the node (S112).

9. The method according to the Claim 8, further comprising:
determining whether or not a command of a head which is included in the received telegram is the command related to the communication path (S110); and
generating the non-pass signal which indicates that the telegram does not pass through the public line when the command of the head which is included in the telegram is not the command related to the communication path (S111).

10. The method according to the Claim 8, further comprising:
transmitting commands which are included in the telegram after transmitting the generated non-pass signal (S115).

11. The method according to the Claim 9, further comprising:
transmitting commands which are included in the telegram after transmitting the generated non-pass signal (S115).

12. The method according to the Claim 10 further comprising:
individually transmitting the commands which are included in the telegram from the head sequentially (S115).

13. The method according to the Claim 11, further comprising:
individually transmitting the commands which are included in the telegram from the head sequentially (S115).
